Europäisches Patentamt

European Patent Office

Office européen des brevets

(11) Publication number: **0 271 146 B1**

# EUROPEAN PATENT SPECIFICATION

(45) Date of publication of patent specification: **03.02.93** (51) Int. Cl.5: **B29C 67/24**, B29C 67/14, B29C 33/10

(21) Application number: **87202336.1**

(22) Date of filing: **25.11.87**

(54) **RIM process for the preparation of thermosetting fibre-reinforced composites.**

(30) Priority: **09.12.86 GB 8629361**

(43) Date of publication of application:
**15.06.88 Bulletin 88/24**

(45) Publication of the grant of the patent:
**03.02.93 Bulletin 93/05**

(84) Designated Contracting States:
**BE DE ES FR GB IT NL SE**

(56) References cited:
**EP-A- 0 294 768
DE-A- 1 200 518
DE-A- 1 704 566
US-A- 4 465 451**

**PLASTICS ENGINEERING, vol. 39, no. 4, April 1983, pages 21-25, Manchester, New Hampshire, US; C.W. MACOSKO: "Insights into molding RIM materials"**

(73) Proprietor: **SHELL INTERNATIONALE RESEARCH MAATSCHAPPIJ B.V.
Carel van Bylandtlaan 30
NL-2596 HR Den Haag(NL)**

(72) Inventor: **De Groot, Hans Robert
Badhuisweg 3
NL-1031 CM Amsterdam(NL)**
Inventor: **Noordam, Arend
Badhuisweg 3
NL-1031 CM Amsterdam(NL)**
Inventor: **Wintraecken, Johannes Jacobus Maria Hyacinthus
Badhuisweg 3
NL-1031 CM Amsterdam(NL)**

37TH ANNUAL CONFERENCE, REINFORCED PLASTICS/COMPOSITES INSTITUTE, THE SOCIETY OF THE PLASTICS INDUSTRY, INC., 11th - 15th January 1982, pages 1-6; R.D. FARRIS et al.: "Structural parts from epoxy RIM using preplaced reinforcement"

KUNSTSTOFFE, vol. 69, no. 11, November 1979, pages 773-776, Munich, DE; H. BÜHRLE: "Entlüftung des Formnests in Blaswerkzeugen"

PATENT ABSTRACTS OF JAPAN, vol. 4, no. 179 (M-46)[661], 11th December 1980; & JP-A-55 126 432 (OLYMPIC TSURIGU K.K.) 30-09-1980

KUNSTSTOFFBERATER, vol. 28, no. 4, April 1983, pages 13-15, Frankfurt, Main, DE; E. ECK: "Werkzeug-Technologie von RIM- und RRIM-Anwendungen"

## Description

The invention relates to a process for the preparation of fibre-reinforced epoxy resin composites via Reaction Injection Moulding (RIM).

RIM is a well established production technique in the moulding industry and affords high speed production of mouldings of widely differing chemical compositions. With RIM a highly reactive reaction epoxy resin/curing agent mixture is injected into a mould to provide after a relatively short reaction time, a dimensionally stable moulding.

Although initially only non-reinforced articles could be manufactured via RIM, the advent of RIM equipment capable of handling abrasive components such as certain reinforcing fillers and/or fibrous reinforcements, now makes it possible to also produce reinforced mouldings, or composites as they will be referred to hereinafter. In the production of composites via RIM there is up to now a restriction when employing fibrous reinforcements in that only fibres of limited dimensions, i.e. chopped fibres can be handled.

Although such composites prepared via RIM may be used in many applications, the overall level of their performance properties is not always sufficient to meet the requirements of end uses where a very high level of mechanical performance is required such as in load-bearing structural applications. Whilst it would be possible in principle to meet those more demanding requirements via RIM employing a reinforcement of continuous fibres, preferably in the form of preformed structures having a shape that corresponds with the internal volume of the mould, such technology is not easy to conceive. For, the epoxy resins that have the required high curing rates are normally very viscous products which do not flow easily through all of the pore volume of the structure composed of continuous fibres. It has proven very difficult to control the flow such that no air is entrapped in the mouldings. This problem is aggravated when employing preshaped continuous fibre structures having a large packing density, e.g. in the order of 20 to 65 %v.

The problem underlying the present invention is to find a method for the production of substantially void free epoxy matrix reinforced mouldings comprising preshaped continuous fibres having a relatively large packing density.

This problem is solved by providing a process for the preparation of fibre-reinforced compositions by positioning a preshaped continuous fibre-reinforcement having a packing density of from 20 to 65 %v in a multi-sectional mould, and injecting an epoxy resin/curing agent system, characterized in that the mould is equipped with a gas-permeable seal that is positioned between the contacting surface or surfaces of the adjoining mould sections.

The gas-permeable seal employed in the process of the present invention may suitably be prepared from any material which allows air to flow from the mould in a controlled manner. Open-cell polyurethane (PU) foam is a preferred seal. Suitable open-cell PU foam will before compression between the mould sections, have a density in the range of from 10 to 100 g/l and preferably in the range of from 20 to 50 g/l, while its density after compression will preferably be in the range of from 600 to 1500 g/l.

In a preferred embodiment of the process of this invention the moulding operation is contained to allow the injected epoxy resin/curing agent mixture to impregnate the foam seal. Since highly reactive epoxy resins are employed in order to achieve short cycle-times, the resin mix, upon impregnating the foam gels in a very short period, thus making the seal airtight.

Injecting a small excess of resin after the gelling of the mix in the foam leads to build-up of pressure in the internal of the mould. The latter effect assists in the obtaining of mouldings with a negligibly low void content, or in obtaining mouldings that are virtually free of voids.

It is observed that the use of a foam seal in gas-bleed outlets of a mould for RIM of non-reinforced foamed polyurethanes is known from GB-A-2,035,778. However, it should be realized that in that event the gas-bleed openings are large to permit evacuating the significant volumes of released foaming agent from the mould. If no seal were positioned in the outlets, the result would be loss of valuable polyurethane resin from the mould through the large openings. Thus, this known foam seal has not been proposed in that prior art reference for providing a solution to the problem how to produce substantially void-free composites comprising preshaped continuous fibre reinforced epoxy resin mouldings.

The continuous fibre-reinforcement which may be employed in the process of the present invention includes glass- and carbon fibre-based continuous reinforcements as well as synthetic organic fibre-based reinforcements such as polyaramide, polyester-, nylon-and polypropylene-based reinforcements. Glass fibres are preferred. The continuous fibre-reinforcement may be employed as fibres of identical or varying dimensions, it is in the form of a preshaped fibre-reinforcement such as a (non)woven cloth or tape.

With fibre-reinforced composites which have to meet the highest level of mechanical property requirements, said level of mechanical properties has been found to be closely related to the distribution of the reinforcement in the composite, e.g. random, homogeneous or in a specific pattern. To this end the reinforcement will be positioned in the mould in an external shape that closely corresponds with the internal free volume of the empty mould. Fitting a somewhat larger preshaped structure in the mould by compressing is also included within the scope of this invention. A method to ensure optimum reinforcement in the composite is to impregnate said preshaped reinforcement with a solution of a crosslinkable binder system, preferably a solution of the same crosslinkable binder system as used for the composite preparation. After drying by evaporating the solvent, the preshaped reinforcement is cured to make it dimensionally stable.

The packing density of the preshaped continuous fibre is preferably in the range of from 30 to 60 %v. %v is defined herein as "total volume of fibre divided by internal volume of the empty mould multiplied by one hundred".

In a preferred embodiment of this invention the dimensional shape of the foam seal corresponds with that of the mould sections, e.g. a pot of bowl-shaped moulding will comprise mould sections with circular contacting surfaces and the corresponding foam seal will then be a ring which is put between the circular contacting surface. Air entrapped in the closed mould can thus escape all around, through any part of the foam seal. A continuous foam seal of the type as set out above is however not strictly necessary. The contacting surfaces of the mould sections may be provided with recessed elements or grooves, which upon closing the mould create air-bleed openings and foam seal can then be placed in those openings.

The type of epoxy-containing compound which may be used in the reactive composition is not critical and includes virtually any type of epoxy compound which is as such sufficiently low viscous at the temperature of injection to allow processing by the RIM equipment or alternatively meets these viscosity requirements when mixed with a reactive diluent. Such epoxy compounds include di- and polyglycidyl ethers of mono- and/or polynuclear phenols, di- and polyglycidyl ethers of polyhydric alcohols, di- and polyglycidyl esters of polycarboxylic acids. Modified epoxy resins such as halogenated i.e. brominated epoxy resins may also be used. Preferred such glycidyl ethers are based on dihydric phenols such as 2,2-bis(4-hydroxyphenyl)propane having an epoxy group concentration (EGC) in the range of from 3 to 5.5 mol/kg.

The curing agents which may conveniently be employed with epoxy compounds mentioned hereinbefore include aliphatic amines, aromatic amines, anhydrides, imidazoles, polyols, polyamides, polyisocyanates and dicyanodiamide. Such curing agents are very reactive thus enabling very short moulding-cycle times of e.g. less than 3 minutes.

The reactive composition may further contain one or more catalysts such as sulphonic acids, carboxylic acids, Lewis acids, tertiary amines, imidazoles, phenols, onium salts and the like. Reactive diluents may also be present e.g. monoglycidyl ethers and esters, unsaturated monomers such as vinyl aromatic compounds in combination with a polymerization initiator, e.g. styrene in combination with a peroxide compound. Further additives which may be present include wetting agents, surfactants, thixotropic agents, internal release agents, antistatic agents, toughening agents and the like. Inorganic fillers such as calcium carbonate, clay and chopped inorganic fibres, may also be present as well as carbon black, chopped organic fibres, pigments and dyes.

The process according to the present invention may conveniently be carried out by introducing the continuous fibre-reinforcement, optionally together with open-cell foam for immobilizing the reinforcement as described hereinbefore, into the open mould of which the internal surface(s) had optionally been treated with a release agent. Subsequently the gas-permeable seal is placed and the mould is assembled and closed. Depending on the nature of the mould and RIM equipment it is possible that one mould section is permanently connected to the RIM machine, alternatively the mould is connected to the RIM machine during or after closing the mould. Treating the internal surface(s) of the mould with a release agent to facilitate demoulding is not always necessary as it is also possible to use e.g. an internal release agent, i.e. a release agent which has been incorporated in the reactive composition.

When the reactive composition is injected into the mould, the mould temperature will generally be at least similar to the temperature of the reactive mixture in order to ensure good flow within the mould. In practice the mould will generally have the temperature required for crosslinking or polymerization of the composition injected. The actual temperature and the time during which the filled mould is held at that temperature (cure schedule) will be very much determined by the nature of the reactive composition. The cure schedule or polymerization time will generally be such that after demoulding a dimensionally stable composite is obtained which if required may be submitted to a further heat treatment (post-cure).

The invention will be further understood from the Examples given hereinafter for which the following information is provided.

A. EQUIPMENT

1. Kraus-Maffei RIM-Star 16/40 dispensing unit
2. Mould A, a 2-section, oil heated aluminium mould having cavity dimensions of 35 x 50 x 0.6 cm.
3. Mould B, an electrically heated steel mould having the following dimensions: diameter 40 cm, height 13 cm and wall thickness 0.6 cm, mould cavity volume: 1250 cm$^3$.
4. A press having a closing force of 80 tonnes.

B. GAS-PERMEABLE SEAL

An open-cell PU foam having a density of 25 g/l.

C. REACTIVE COMPOSITION

The reactive composition was obtained by mixing in a 4:1 weight ratio:stream A (Temp. 80 °C) comprising EPIKOTE 828 (registered trade mark), being a diglycidyl ether of 2,2-bis(4-hydroxy phenyl) propane and having an EGC 5306 mmol/kg, with stream B (Temp. 20 °C) comprising a 24:1 weight ratio of isophorone diamine and salicylic acid.

D. CONTINUOUS FIBRE-REINFORCEMENT

1. Marglass, style 138 (Funsh P 703) ex Marglass Ltd. England, a balanced open weave (mock leno) cloth having a weight of 300 g/m$^2$.
2. Diagonap 04.20 x 2.00 and Diagonap 04.40 x 2.00 ex Les Fils d' A. Chomarat et Cie, France. Each comprising 2 layers of undirectional fibres, wherein both the fibres in each layer and the two layers are held together by organic fibres (approximately 3 %w organic fibre on reinforcement). The direction of the fibres in the two layers are approximately at right angles to one and other. The weight of the two types of reinforcement are 350 and 450 g/m$^2$ respectively.

When a pretreated reinforcement was used, the pretreatment was accomplished by dipping the reinforcement in a 5 %w solution of the reactive composition, as described under B, in methylethylketone, transferred to a mould to obtain the correct shape, and after drying in the air, cured for 10 min at 120 °C, which resulted in a dimensionally stable shaped reinforcement.

E. DETERMINATION OF VOID CONTENT

The void content was determined according to the method (test reference 303.12) described in "GRAFIL test methods", published by Courtaulds Limited Carbon Fibre Unit, England; wherein the following formula is used

$$\text{Percentage voids by volume} = 100 \left[ 1 - \left( \frac{W_f}{P_f} + \frac{W_c - W_f}{P_r} \right) \frac{P_c}{W_c} \right]$$

Wherein

$P_c$ : density of composite

$P_f$ :   "     "   fibre

$P_r$ :   "     "   cured resin

$W_f$ : weight of fibre in composite

$W_c$ : weight of composite

Examples I-X

Preparation of glass fibre-reinforced polymer matrix composites

Glass fibre-reinforced polymer matrix composites were prepared employing both mould A and B. The moulds were equipped with a polyurethane foam seal having before compression a thickness of 1 cm and a width of 3.5 cm. The internal mould surface was treated with DOW Corning 20 (trade name) release agent. After introducing the reinforcement of type and in amount as indicated in Table 1 hereinafter, the mould was closed by placing it in the press and connected to the RIM machine.

The compression factor of the seal was found to be 35.

The mould temperature was brought to 120 °C and subsequently the reactive composition was injected into the mould at a rate of 6.5 kg/min.

Demoulding was carried out after 4 to 5 minutes and the composites were subsequently post-cured for 2 h at 150 °C.

The composition of the composites as well as the void content are given in Table 1.

Comparative experiment

Example IV was repeated but using a mould not provided with the PU foam seal, the result of which is also given in Table 1.

## Table 1

| Example | Reinforcement* type | | Glass content % v | Mould type | Void content % |
|---|---|---|---|---|---|
| I | Marglass | 14 ply | 26 | A | 1.0 |
| II | " | 16 " | 30.3 | A | 0.9 |
| III | " | 18 " | 32.9 | A | 1.2 |
| IV | " | 20 " | 37.7 | A | 0.8 |
| V | Diag.04.20x2.00 | 14 " | 31.8 | A | 2.6 |
| VI | Marglass | 3 + 3 ply** | " | A | -** |
| VII | Diag.04.20x2.00 | - | 34.3 | B | 2.3 |
| VIII | " " " | - | 42.9 | B | 1.7 |
| IX | " 04.40x2.00 | - | 51.9 | B | 0.7 |
| X | " " " | - | 50.4 | B | 0.6 |
| Comparative experiment (no seal) | Marglass | 20 ply | 40.0 | A | 13.8 |

\* All reinforcements were pretreated except in Example VI

\** Reinforcement consisted of twice 3 plies separated by PU foam. In view of the inhomogeneous glass distribution and presence of foam no significant value for void content could be provided.

## Claims

1. A process for the preparation of fibre-reinforced epoxy matrix compositions by positioning a preshaped continuous fibre-reinforcement having a packing density of from 20 to 65 %v in a multi-sectional mould, and injecting an epoxy resin/curing agent system, characterized in that the mould is equipped with a gas-permeable seal that is positioned between the contacting surface or surfaces of the adjoining mould sections.

2. A process according to claim 1, wherein the seal is a compressed open-cell polyurethane foam seal having, after compression between the mould sections, a density in the range of from 600 to 1500 g/l.

3. A process according to claim 1 or 2, wherein the continuous fibre-reinforcement has a packing density of from 30 to 60 %v.

4. A process as claimed in any of claims 1 to 3, wherein the injection of the epoxy resin/curing agent mixture is continued until the foam seal is impregnated with said mixture in order to make the seal airtight.

5. A process according to any of claims 1 to 4, wherein the epoxide is a diglycidyl ether of 2,2-bis(4-hydroxyphenyl) propane having an EGC in the range of from 3 to 5.5 mol/kg and the curing agent is selected from the group comprising aliphatic amines, aromatic amines, anhydrides, imidazoles, polyols, polyamides, polyisocyanates and dicyanodiamide..

**Patentansprüche**

1. Ein Verfahren zur Herstellung von faserverstärkten Epoxymatrix-Zusammensetzungen durch Anordnen einer vorgeformten Endlosfaserverstärkung mit einer Packungsdichte von 20 bis 65 Volumenprozent in eine Gußform mit vielen Abschnitten, und durch Injizieren eines Epoxyharz/Härtemittel-Systems, **dadurch gekennzeichnet**, daß die Gußform mit einer gasdurchlässigen Dichtung versehen ist, die zwischen der Kontaktfläche oder der Fläche der angrenzenden Gußformabschnitte angeordnet ist.

2. Ein Verfahren nach Anspruch 1, in welchem die Dichtung eine komprimierte offenzellige Polyurethanschaumdichtung ist, die nach der Kompression zwischen den Gußformabschnitten eine Dichte im Bereich von 600 bis 1500 g/l aufweist.

3. Ein Verfahren nach Anspruch 1 oder 2, in welchem die Endlosfaserverstärkung eine Packungsdichte von 30 bis 60 Volumenprozent aufweist.

4. Ein Verfahren wie in einem der Ansprüche 1 bis 3 beansprucht, in welchem die Injektion der Epoxyharz/Härtemittel-Mischung solange fortgesetzt wird, bis die Schaumdichtung mit der genannten Mischung imprägniert ist, um die Dichtung luftundurchlässig zu machen.

5. Ein Verfahren nach einem der Ansprüche 1 bis 4, in welchem das Epoxid ein Diglycidyläther von 2,2-Bis(4-hydroxyphenyl)propan mit einer Epoxygruppenkonzentration im Bereich von 3 bis 5,5 mMol/kg ist und das Härtemittel ausgewählt ist aus der Gruppe, umfassend aliphatische Amine, aromatische Amine, Anhydride, Imidazole, Polyole, Polyamide, Polyisocyanate und Dicyandiamid.

**Revendications**

1. Un procédé pour la préparation de compositions de matrice époxy renforcées par des fibres, en positionnant un renforcement en fibres continues préformées présentant une densité de tassement de 20 à 65% en volume dans un moule à plusieurs éléments, et en injectant un système résine époxy/agent de réticulation, caractérisé en ce que le moule est équipé d'un joint perméable au gaz, qui est positionné entre la surface ou les surfaces de contact des éléments contigus du moule.

2. Un procédé selon la revendication 1, dans lequel le joint d'étanchéité est un joint d'étanchéité en mousse de polyuréthane comprimé à alvéoles ouverts présentant, après la compression entre les parties du moule, une densité dans la gamme de 600 à 1500 g/l.

3. Un procédé selon la revendication 1 ou 2, dans lequel le renforcement en fibres continues présente une densité de tassement de 30 à 60% en volume.

4. Un procédé tel que revendiqué dans l'une quelconque des revendications 1 à 3, dans lequel l'injection du mélange de résine époxy/agent de réticulation est poursuivie jusqu'à ce que le joint d'étanchéité en mousse soit imprégné dudit mélange afin de réaliser un joint imperméable à l'air.

5. Un procédé selon l'une quelconque des revendications 1 à 4 dans lequel l'époxyde est un éther diglycidylique de 2,2-bis(4-hydroxyphényl)propane présentant un EGC dans la gamme de 3 à 5,5 moles/kg et l'agent de réticulation est choisi dans le groupe constitué par les amines aliphatiques, les amines aromatiques, les anhydrides, les imidazoles, les polyols, les polyamides, les polyisocyanates et

le dicyanodiamide.